# EUROPÄISCHE PATENTSCHRIFT

(11) **EP 4 214 032 B1**
(45) Veröffentlichungstag und Bekanntmachung des Hinweises auf die Patenterteilung: **02.10.2024**
(21) Anmeldenummer: 21770162.2
(22) Anmeldetag: 26.08.2021
(51) Int. Cl.: B27B 17/02, A01G 23/091, B27B 17/00

(54) **VORRICHTUNG ZUR HOLZERNTE**
DEVICE FOR HARVESTING WOOD
DISPOSITIF POUR LA RÉCOLTE DU BOIS

(30) Priorität: 17.09.2020 AT 507892020
(43) Veröffentlichungstag der Anmeldung: 26.07.2023
(73) Patentinhaber: Steininger, Werner, 4722 Peuerbach (AT)
(72) Erfinder: Steininger, Werner, 4722 Peuerbach (AT)
(74) Vertreter: KLIMENT & HENHAPEL
(86) Internationale Anmeldenummer: PCT/EP2021/073674
(87) Internationale Veröffentlichungsnummer: WO 2022/058139

(56) Entgegenhaltungen:
- WO-A2-03/011011
- CA-A1- 2 431 601
- US-A- 3 991 799
- US-A1- 2008 196 790

## Beschreibung

Die Erfindung betrifft eine Vorrichtung zur Holzernte mit einem steuerbaren Auslegerarm und einer Säge- und Greifereinheit, die am Auslegerarm befestigt ist und eine Sägeeinheit sowie eine Greifereinheit umfasst, wobei die Greifereinheit zumindest ein Greiferpaar zweier um Greiferschwenkachsen zueinander schwenkbarer Greiferarme für einen Baumstamm aufweist, und die Sägeeinheit einen in einem Sägekasten angeordneten Schwenkantrieb für ein aus dem Sägekasten ausschwenkbar angeordnetes Schneidelement zum Durchtrennen des Baumstammes aufweist, das als Kettensäge ausgeführt ist, gemäß dem Oberbegriff von Anspruch 1.

Vorrichtungen der genannten Art wurden in der AT 516.454 B1 des Anmelders beschrieben und werden für die Holzernte verwendet, wobei eine Bedienperson von einer Bedienkanzel der Vorrichtung aus einen Auslegerarm so steuert, dass an einer Säge- und Greifereinheit angeordnete Greiferarme einen Baumstamm umfassen, wobei in weiterer Folge über eine entsprechende Hydraulik ein Schließdruck auf die Greiferarme ausgeübt wird, die über eine zangenartige Bewegung den Baumstamm relativ zum Auslegerarm fixieren. Nach der Fixierung des Baumstammes kann das Schneidelement so verschwenkt werden, dass der Baumstamm durchtrennt wird. Das Schneidelement ist als Kettensäge ausgeführt und im Sägekasten schwenkbar gelagert, wobei es mithilfe eines im Sägekasten angeordneten Schwenkantriebes aus dem Sägekasten ausgeschwenkt werden kann, um einen von den Greiferarmen gehaltenen Baumstamm in einem unterhalb der Greiferarme liegenden Bereich zu durchtrennen. Der abgetrennte Baumstamm verbleibt aufgrund seiner Fixierung relativ zum Auslegerarm mithilfe der Greiferarme in fixierter Lage und kann in weiterer Folge durch entsprechende Ansteuerung des Auslegerarmes kontrolliert umgelegt werden.

Das Schneidelement wird dabei im praktischen Einsatz stark belastet. Bei Verwendung einer Kettensäge übt der durchtrennte Baumstamm aufgrund seines zunehmend wirkenden Eigengewichts, das vom Auslegerarm nicht gänzlich aufgenommen werden kann, hohe Kräfte auf das Schwert der Kettensäge aus, die zum Verkeilen des Schwerts und zu Beschädigungen der Kettensäge führen können. Daher wurde in der oben genannten AT 516.454 B1 des Anmelders ein Schneidwerk umfassend das Schneidelement und den Schwenkantrieb für das Schneidelement vorgeschlagen, das an einem die Greiferarme aufweisenden Greifwerk der Säge- und Greifereinheit beweglich angeordnet ist. Die bewegliche Aufhängung verleiht dem Schwert der Kettensäge ausreichende Beweglichkeit, um Belastungen beim vollständigen Durchtrennen eines von den Greiferarmen fixierten Baumstammes abfedern zu können. Belastungen auf das Schwert der Kettensäge und damit einhergehende Beschädigungen können dadurch reduziert werden. Allerdings zeigt sich im praktischen Einsatz, dass der von den Greiferarmen gehaltene Baumstamm während und nach dem Durchtrennen des Baumstammes mitunter nicht gänzlich fixiert werden kann und abrutschen kann. Das Schwert der Kettensäge wird dabei nicht nur massiv belastet, sondern kann in seiner Funktion und Schwenkbarkeit auch gänzlich blockiert werden. Die oben erwähnte Beweglichkeit des Schneidwerks relativ zum Greifwerk ist dabei mitunter nicht ausreichend, um diese Belastungen und mögliche Blockaden zu verhindern.

Eine Vorrichtung gemäß dem Oberbegriff des Anspruchs 1 ist aus US 3 991 799 A bekannt.

Es ist somit das Ziel der Erfindung bei einer eingangs erwähnten Vorrichtung zur Holzernte Belastungen auf das Schneidelement während des Durchtrennens eines Baumstammes zu reduzieren und insbesondere auch Funktionsbeeinträchtigungen durch Blockaden des Schneidelements zu vermeiden.

Diese Ziele werden durch die Merkmale von Anspruch 1 erreicht. Anspruch 1 bezieht sich auf eine Vorrichtung zur Holzernte mit einem steuerbaren Auslegerarm und einer Säge- und Greifereinheit, die am Auslegerarm befestigt ist und eine Sägeeinheit sowie eine Greifereinheit umfasst, wobei die Greifereinheit zumindest ein Greiferpaar zweier um Greiferschwenkachsen zueinander schwenkbarer Greiferarme für einen Baumstamm aufweist, und die Sägeeinheit einen in einem Sägekasten angeordneten Schwenkantrieb für ein aus dem Sägekasten ausschwenkbar angeordnetes Schneidelement zum Durchtrennen des Baumstammes aufweist, das als Kettensäge ausgeführt ist. Erfindungsgemäß wird hierbei vorgeschlagen, dass der Sägekasten um eine Schwenkachse schwenkbar an der Greifereinheit angeordnet ist und über ein Federelement und eine Kolben-Zylindereinheit mit der Greifereinheit verbunden ist, wobei das Federelement über ein rückstellendes Drehmoment um die Schwenkachse in seiner Gleichgewichtslage eine vorgegebene Schneidposition des Sägekastens mit einer ihr zugeordneten Schneidebene des Schneidelements definiert, und der Sägekasten mittels der Kolben-Zylindereinheit in Überwindung des rückstellenden Drehmoments des Federelements in eine relativ zur Schneidposition gekippte Neigeposition schwenkbar ist, der eine zur Schneidebene gekippte Neigungsebene des Schneidelements zugeordnet ist, wobei die Lagerung der Kolben-Zylindereinheit am Sägekasten oder an der Greifereinheit in der Schneidposition des Sägekastens einen Bewegungsfreiraum aufweist.

Erfindungsgemäß wird somit einerseits mithilfe des Federelements eine um die Schwenkachse bewegliche Aufhängung der Sägeeinheit relativ zur Greifereinheit bewerkstelligt. Auf das Schneidelement während des Durchtrennens eines Baumstammes wirkende Belastungen werden dadurch verringert, wobei das Federelement über ein rückstellendes Drehmoment um die Schwenkachse in seiner Gleichgewichtslage eine vorgegebene Schneidposition des Sägekastens mit einer ihr zugeordneten Schneidebene des Schneidelements definiert, in die das Schneidelement nach Auslenkungen durch äußere Belastungen mithilfe des Federelements wieder rückgestellt wird. Um die oben erwähnten Blockaden des Schneidelements zu vermeiden ist zusätzlich eine Kolben-Zylindereinheit vorgesehen, die durch eine Bedienperson aktiviert werden kann und nach Aktivierung in Überwindung des rückstellenden Drehmoments des Federelements den Sägekasten in eine relativ zur Schneidposition gekippte Neigeposition verschwenkt, der eine zur Schneidebene gekippte Neigungsebene des Schneidelements zugeordnet ist. Das Schneidelement kann auf diese Weise in eine vom Baumstamm beabstandete Neigungsebene gekippt werden, um Blockaden zu vermeiden oder aufzuheben. Das Federelement und die Kolben-Zylindereinheit sind dabei sowohl am Sägekasten als auch an der Greifereinheit so befestigt, dass sie sich jeweils um zur Schwenkachse parallele Drehachsen bewegen können. Da zudem vorgesehen ist, dass die Lagerung der Kolben-Zylindereinheit am Sägekasten oder an der Greifereinheit in der Schneidposition des Sägekastens einen Bewegungsfreiraum aufweist, ist auch bei inaktiver und somit unbewegter Kolbenstange eine Beweglichkeit des Sägekastens und somit auch des Schneidelements sichergestellt. Durch Aktivierung der Kolben-Zylindereinheit kann der Sägekasten mittels der Kolben-Zylindereinheit in seine Neigeposition gekippt werden, wobei das Federelement mitgedrückt wird.

Der Bewegungsfreiraum kann als ein am Sägekasten angeordnetes Langloch ausgeführt sein, in dem die Kolbenstange der Kolben-Zylindereinheit mithilfe eines Gleitlagers gelagert ist. Der Sägekasten ist somit in seiner Schneidposition relativ zur Kolben-Zylindereinheit mit Spiel gehalten, da er sich im Rahmen der Begrenzungen des Langloches relativ zur Kolbenstange bewegen kann, was dem erfindungsgemäß vorgesehenen Bewegungsfreiraum entspricht. Nach Aktivierung der Kolben-Zylindereinheit und Erreichen der Langlochbegrenzung wird der Sägekasten von der Kolben-Zylindereinheit um die Schwenkachse gekippt.

Eine konkrete Ausführung von Federelement und Kolben-Zylindereinheit sieht etwa vor, dass das Federelement und die Kolbenstange der Kolben-Zylindereinheit an einem Anlenkbereich befestigt sind, der am Sägekasten angeformt oder befestigt ist und mit dem Sägekasten kinematisch einen zweiarmigen Hebel um die Schwenkachse bildet, wobei der Sägekasten einen ersten Hebelarm bildet und der Anlenkbereich einen zweiten Hebelarm. Der Anlenkbereich kann etwa in Form von plattenförmig vom Sägekasten abstehenden Anlenkhebel ausgeführt sein, an denen das Federelement und die Kolben-Zylindereinheit gelenkig befestigt sind. Der für die Lagerung der Kolbenstange der Kolben-Zylindereinheit vorgesehene Anlenkhebel weist dabei das oben erwähnte Langloch zur Sicherstellung des Bewegungsfreiraumes auf. Das Federelement ist an einem ihm zugeordneten Anlenkhebel mithilfe eines Schwenklagers angelenkt, das eine Beweglichkeit des Federelements um eine zur Schwenkachse parallele Drehachse sicherstellt.

Die Schwenkachse ist vorzugsweise unterhalb des untersten Greiferpaares und senkrecht zu deren Greiferschwenkachsen angeordnet. Bei vertikaler Anordnung der Greiferschwenkachsen zum Umgreifen eines Baumstammes ist daher die Schwenkachse des Sägekastens horizontal ausgerichtet, sodass der Sägekasten nach unten gekippt werden kann. Das Federelement und die Kolben-Zylindereinheit sind vorzugsweise an der den Greiferarmen abgewandten Seite der Greifereinheit angeordnet. Der Sägekasten ist an sich in herkömmlicher Weise ausgeführt und öffnet sich in jene Richtung, in die sich auch die Greiferarme öffnen. Das Schneidelement durchquert somit beim Ausschwenken aus dem Sägekasten in bekannter Weise einen unterhalb der Greiferarme liegenden Bereich zur Durchtrennung eines Baumstammes.

Zur Vereinfachung der kinematischen Verhältnisse wird vorgeschlagen, dass das Federelement als Schraubendruckfeder ausgeführt ist, die im Wesentlichen parallel zur Längsachse der Kolben-Zylindereinheit angeordnet ist. Die Kolben-Zylindereinheit wirkt somit im Wesentlichen entlang der Wirkachse der Schraubendruckfeder. Die Schraubendruckfeder und die Kolben-Zylindereinheit sind dabei wie bereits erwähnt sowohl am Sägekasten als auch an der Greifereinheit jeweils um zur Schwenkachse parallele Drehachsen bewegbar befestigt.

Des Weiteren wird vorgeschlagen, dass das als Kettensäge ausgeführte Schneidelement mit einer Fettschmierung versehen ist. Eine Fettschmierung verfügt im Vergleich zu einer Ölschmierung über den Vorteil, dass es bei Arbeiten in großer Höhe nicht zu Ölvernebelungen kommen kann, die die Bedienkanzel verschmutzen könnten. Zudem ist der Schmiermittelauftrag bei einer Fettschmierung beständiger und somit auch sparsamer.

Um stets eine optimale Kettenspannung zu gewährleisten wird ferner vorgeschlagen, dass das als Kettensäge ausgeführte Schneidelement mit einem automatischen Kettenspanner versehen ist. Auf diese Weise wird unabhängig von der Betriebsdauer stets eine optimale Kettenspannung sichergestellt.

Die Erfindung wird in weiterer Folge anhand eines Ausführungsbeispiels mithilfe der beiliegenden Figuren näher erläutert. Es zeigen hierbei die
Fig. 1 eine perspektivische Ansicht einer Ausführungsform der Erfindung, wobei lediglich die Säge- und Greifereinheit mit ihrem Befestigungsbereich zur Befestigung an einem Auslegerarm dargestellt ist,
Fig. 2 eine Darstellung der Sägeeinheit mit dem Federelement und der Kolben-Zylindereinheit,
Fig. 3a eine Seitenansicht der Sägeeinheit mit der Kolben-Zylindereinheit gemäß der Fig. 1 in einer Grundstellung, bei der sich der Sägekasten in einer Schneidposition befindet,
Fig. 3b eine Seitenansicht der Sägeeinheit mit dem Federelement gemäß der Fig. 1 in einer Grundstellung, bei der sich der Sägekasten in einer Schneidposition befindet,
Fig. 4a eine Seitenansicht der Sägeeinheit mit einer inaktiven Kolben-Zylindereinheit gemäß der Fig. 1 in einer durch Belastungen aus der Grundstellung ausgelenkten Stellung,
Fig. 4b eine Seitenansicht der Sägeeinheit mit einem aktiven Federelement gemäß der Fig. 1 in einer durch Belastungen aus der Grundstellung ausgelenkten Stellung,
Fig. 5a eine Seitenansicht der Sägeeinheit mit einer aktiven Kolben-Zylindereinheit gemäß der Fig. 1 in einer durch die Kolben-Zylindereinheit aus der Grundstellung ausgelenkten Neigeposition, und die
Fig. 5b eine Seitenansicht der Sägeeinheit mit dem mitgedrückten Federelement gemäß der Fig. 1 in einer durch die Kolben-Zylindereinheit aus der Grundstellung ausgelenkten Neigeposition.

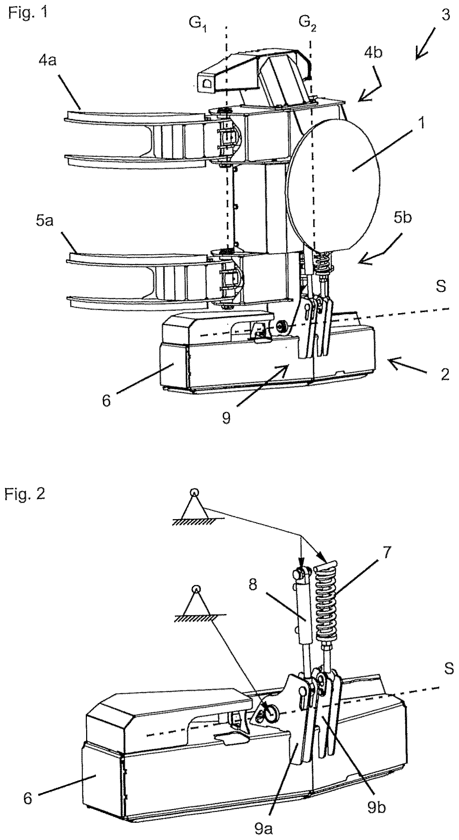

Zunächst wird auf die Fig. 1 Bezug genommen, die eine perspektivische Ansicht einer erfindungsgemäßen Säge- und Greifereinheit mit ihrem Befestigungsbereich 1 zur Befestigung an einem Auslegerarm (in den Fig. 1-5 nicht ersichtlich) zeigt. Die Säge- und Greifereinheit umfasst eine Sägeeinheit 2 sowie eine Greifereinheit 3. Die Greifereinheit 3 weist im gezeigten Ausführungsbeispiel zwei Greiferpaare 4, 5 zweier um Greiferschwenkachsen G₁, G₂ zueinander schwenkbarer Greiferarme 4a, 4b, 5a, 5b für einen Baumstamm auf, wobei die Greiferame 4b, 5b durch die sichtbaren Teile der Greifereinheit 3 verdeckt sind, und die Sägeeinheit 2 einen in einem Sägekasten 6 angeordneten Schwenkantrieb für ein aus dem Sägekasten 6 ausschwenkbar angeordnetes Schneidelement zum Durchtrennen des Baumstammes, das als Kettensäge ausgeführt ist. Der Befestigungsbereich 1 stellt die Verbindung zu einem in den Fig. 1-5 nicht gezeigten Auslegerarm her, beispielsweise über ein Drehwerk, mit dem die Säge- und Greifereinheit relativ zum Auslegerarm verdrehbar ist und das ein an der Greifereinheit 3 angeordnetes, greiferseitiges Drehteil und einen am Auslegerarm angeordnetes, auslegerarmseitiges Drehteil umfasst. Die Bewegungen des Auslegerarms werden somit über das Drehwerk unmittelbar auf die Säge- und Greifereinheit übertragen. Über das Drehwerk kann zudem eine Rotationsbewegung der Säge- und Greifereinheit relativ zum Auslegerarm bewerkstelligt werden. Am oder im Befestigungsbereich 1 verlaufen hydraulische Leitungen (in den Fig. 1 bis 5 nicht dargestellt) für die Greiferpaare 4, 5, die von einer Bedienkanzel bedient werden und ein Schließen und Öffnen der Greiferpaare 4, 5 bewirken. Beim Schließen schwenken die Greiferpaare 4, 5 zangenartig aufeinander zu, und beim Öffnen bewegen sie sich voneinander weg.

Der Sägekasten 6 ist an sich in herkömmlicher Weise ausgeführt und öffnet sich in jene Richtung, in die sich auch die Greiferpaare 4, 5 öffnen. Das Schneidelement durchquert somit beim Ausschwenken aus dem Sägekasten 6 in bekannter Weise einen unterhalb der Greiferarme 4a, 4b, 5a, 5b liegenden Bereich zur Durchtrennung eines Baumstammes. Die Sägeeinheit 2 ist dabei um eine Schwenkachse S schwenkbar an der Greifereinheit 3 angeordnet, wobei mithilfe eines Federelements 7 eine um die Schwenkachse S bewegliche Aufhängung der Sägeeinheit 2 relativ zur Greifereinheit 3 verwirklicht ist (siehe auch Fig. 2). Die Federkonstante des Federelements 7 ist dabei so gewählt, dass einerseits eine sichere Schnittführung gewährleistet ist, aber andererseits bei Belastungen der Kettensäge eine ausreichende Flexibilität der Aufhängung sichergestellt wird. Die Schwenkachse S ist vorzugsweise unterhalb des untersten Greiferpaares 5 und senkrecht zu deren Greiferschwenkachsen G₁, G₂ angeordnet. Bei vertikaler Anordnung der Greiferschwenkachsen G₁, G₂ zum Umgreifen eines Baumstammes ist daher die Schwenkachse S des Sägekastens 6 horizontal ausgerichtet, sodass der Sägekasten 6 nach unten gekippt werden kann. Die Schwenkachse S stellt ferner ein Lager dar, über das der Sägekasten 6 an der Greifereinheit 3 angelenkt ist, wie in den Fig. 2-5 angezeigt ist.

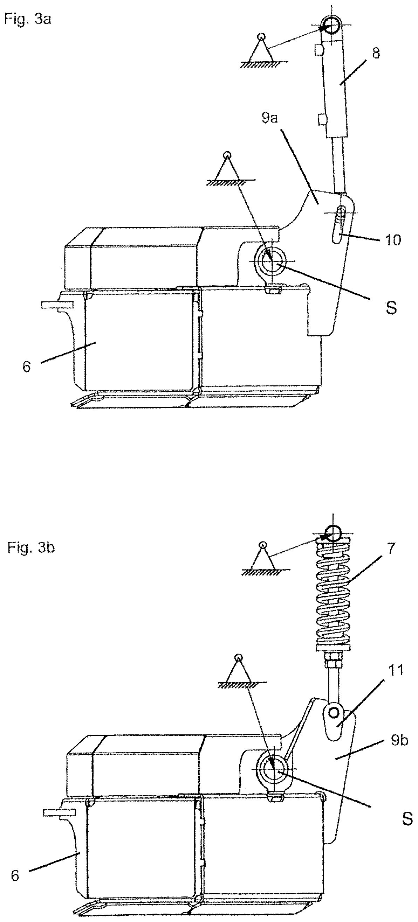

Zusätzlich zur Federeinheit 7 ist eine Kolben-Zylindereinheit 8 vorgesehen, wobei das Federelement 7 und die Kolben-Zylindereinheit 8 an der den Greiferarmen 4a, 4b, 5a, 5b abgewandten Seite der Greifereinheit 3 angeordnet sind. In der gezeigten Ausführungsform ist das Federelement 7 als Schraubendruckfeder ausgeführt, die im Wesentlichen parallel zur Längsachse der Kolben-Zylindereinheit 8 angeordnet ist. Die Kolben-Zylindereinheit 8 wirkt somit im Wesentlichen entlang der Wirkachse der Schraubendruckfeder. Das Federelement 7 und die Kolbenstange der Kolben-Zylindereinheit 8 sind an einem Anlenkbereich 9 befestigt, der am Sägekasten 6 angeformt oder befestigt ist und mit dem Sägekasten 6 kinematisch einen zweiarmigen Hebel um die Schwenkachse S bildet, wobei der Sägekasten 6 einen ersten Hebelarm bildet und der Anlenkbereich 9 einen zweiten Hebelarm. Im gezeigten Ausführungsbeispiel ist der Anlenkbereich 9 in Form von plattenförmig vom Sägekasten 6 abstehenden Anlenkhebel 9a, 9b ausgeführt, an denen das Federelement 7 und die Kolben-Zylindereinheit 8 gelenkig befestigt sind. Der für die Befestigung der Kolbenstange der Kolben-Zylindereinheit 8 vorgesehene Anlenkhebel 9a weist ein Langloch 10 (siehe vor allem Fig. 3a, 4a, 5a) zur Sicherstellung eines Bewegungsfreiraumes für den Sägekasten 6 auf. Das Federelement 7 ist an dem ihm zugeordneten Anlenkhebel 9b mithilfe eines Schwenklagers 11 angelenkt, das eine Beweglichkeit des Federelements 7 um eine zur Schwenkachse S parallele Drehachse sicherstellt. An der dem Anlenkbereich 9 abgewandten Seite sind das Federelement 7 und die Kolben-Zylindereinheit 8 ebenfalls um zur Schwenkachse S parallele Drehachsen beweglich an der Greifereinheit 3 befestigt. Wie in der Fig. 3-5 eingezeichnet wurde, sind das Federelement 7 und die Kolben-Zylindereinheit 8 an der dem Anlenkbereich 9 abgewandten Seite so an der Greifereinheit 3 gelagert, dass Kräfte über die Greifereinheit 3 abgeführt werden können.

Das Federelement 7 und die Kolben-Zylindereinheit 8 bilden somit gemeinsam mit dem Lager der Schwenkachse S eine Aufhängung für den Sägekasten 6, wobei das Federelement 7 über ein rückstellendes Drehmoment um die Schwenkachse S in seiner Gleichgewichtslage eine vorgegebene Schneidposition des Sägekastens 6 mit einer ihr zugeordneten Schneidebene des Schneidelements definiert, in die das Schneidelement nach Auslenkungen durch äußere Belastungen mithilfe des Federelements 7 wieder rückgestellt wird. Da der Sägekasten 6 mithilfe des Langlochs 10 in seiner Schneidposition relativ zur Kolben-Zylindereinheit 8 mit Spiel gehalten ist und sich dadurch im Rahmen der Begrenzungen des Langloches 10 relativ zur Kolbenstange bewegen kann, ist auch bei inaktiver und somit unbewegter Kolbenstange eine Beweglichkeit des Sägekastens 6 und des Schneidelements sichergestellt.

Durch eine Aktivierung der Kolben-Zylindereinheit 8 kann der Sägekasten 6 in Überwindung des rückstellenden Drehmoments des Federelements 7 und bei Erreichen der Langlochbegrenzung von der Kolben-Zylindereinheit 8 aktiv und steuerbar um die Schwenkachse S in seine Neigeposition gekippt werden, der eine zur Schneidebene gekippte Neigungsebene des Schneidelements zugeordnet ist, wobei das Federelement 7 mitgedrückt wird. Das Schneidelement kann auf diese Weise in eine vom Baumstamm beabstandete Neigungsebene gekippt werden, um Blockaden zu vermeiden oder aufzuheben.

In weiterer Folge sollen die Funktionsweise und die Vorteile der Erfindung näher beschrieben werden.

Die Fig. 1 zeigt zunächst eine Konfiguration, bei der ein Baumstamm umfasst werden kann, wobei die Säge- und Greifereinheit mit im Wesentlichen vertikalen Greiferschwenkachsen G₁, G₂ der Greiferpaare 4, 5 und des Schwenkantriebes der Kettensäge orientiert ist. Die Schneidebene der Kettensäge ist dabei im Wesentlichen horizontal ausgerichtet. Auch die Drehachse des Drehwerks ist in dieser Positionierung im Wesentlichen horizontal orientiert. Während des Schnittvorganges der Kettensäge ist das Drehwerk arretiert und vollzieht keine Drehbewegungen, sodass der Baumstamm während des Schnittvorganges der Kettensäge relativ zum Auslegerarm weitestgehend fixiert ist. Die Greiferpaare 4, 5 dienen wie erwähnt zum Umfassen eines zu durchtrennenden Baumstammes, wobei sie im geschlossenen Zustand den Baumstamm fixieren. Beim Schließen der Greiferpaare 4, 5 befindet sich die Kettensäge innerhalb des Sägekastens 6 und somit in einer inaktiven Position. Nachdem die Greiferpaare 4, 5 geschlossen wurden und der Baumstamm somit fixiert ist, kann von der Bedienkanzel der Schwenkantrieb für die Kettensäge aktiviert werden, wobei einerseits die umlaufende Bewegung der Schneidkette gestartet wird, und andererseits die Kettensäge aus dem Sägekasten 6 ausgeschwenkt und in Richtung des zu durchtrennenden Baumstammes verschwenkt wird. Die umlaufende Schneidkette der Kettensäge tritt somit in den Baumstamm ein und durchtrennt ihn. Um den durchtrennten Baumstamm ablegen zu können wird die Feststellung des Drehwerks gelöst und das Drehwerk so betätigt, dass die Säge- und Greifereinheit in eine Position verschwenkt wird, in der der durchtrennte Baumstamm im Wesentlichen horizontal ausgerichtet ist und am Boden abgelegt werden kann.

Das Durchtrennen eines Baumstammes mithilfe einer Kettensäge ist jedoch wie eingangs beschrieben nicht unproblematisch. Insbesondere aufgrund des zunehmend einwirkenden Eigengewichts des Baumstammes können das Schwert und die umlaufende Schneidkette der Kettensäge blockieren. Durch entsprechende Steuerung des Auslegerarmes könnte zwar ein Blockieren der Kettensäge vermieden werden, was aber in der Praxis kaum gelingt. Insbesondere beim Austritt der Kettensäge nach dem vollständigen Durchtrennen des Baumstammes werden stoßartige Belastungen wirksam, die durch Steuerung des Auslegerarmes nicht rasch genug aufgefangen werden können.

Diese auf die Kettensäge wirkenden Belastungen werden reduziert, indem die Sägeeinheit 2 um die Schwenkachse S schwenkbar an der Greifereinheit 3 angeordnet ist, und mithilfe des Federelements 7 eine um die Schwenkachse S bewegliche Aufhängung der Sägeeinheit 2 relativ zur Greifereinheit 3 verwirklicht ist. Diese Grundstellung ist in der Fig. 3a und 3b dargestellt. Das Federelement 7 definiert dabei über ein rückstellendes Drehmoment um die Schwenkachse S in seiner Gleichgewichtslage eine vorgegebene Schneidposition des Sägekastens 6 mit einer ihr zugeordneten, im Wesentlichen horizontalen Schneidebene des Schneidelements. Die Kolben-Zylindereinheit 8 verbleibt zunächst inaktiv. Da der Sägekasten 6 mithilfe des Langlochs 10 in seiner Schneidposition aber relativ zur Kolben-Zylindereinheit 8 mit Spiel gehalten ist und sich dadurch im Rahmen der Begrenzungen des Langloches 10 relativ zur Kolbenstange bewegen kann, ist auch bei inaktiver und somit unbewegter Kolbenstange eine Beweglichkeit des Sägekastens 6 und des Schneidelements um die Schwenkachse S sichergestellt.

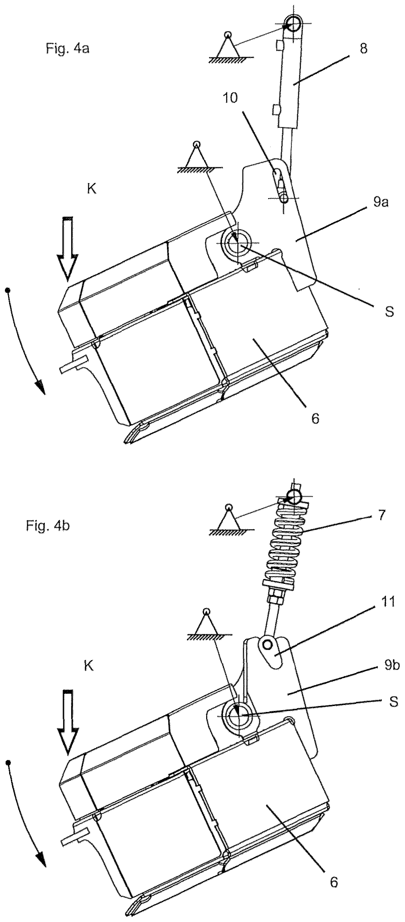

Auf das Schneidelement während des Durchtrennens eines Baumstammes wirkende Belastungen werden bei dieser Lagerung verringert, da sie mithilfe des Federelements 7 um die Schwenkachse S abgefedert werden können, wie in den Fig. 4a und 4b dargestellt ist. In den Fig. 4a und 4b ist eine Belastung in Form einer äußeren Kraft K eingezeichnet, die an sich den Sägekasten 6 und das Schneidelement stark belasten würde. Der Sägekasten 6 kann aufgrund der gefederten Lagerung um die Schwenkachse S bei einer solchen äußeren Belastung aber in Richtung des eingezeichneten Pfeiles nach unten abfedern, wodurch die Belastungen auf das Schneidelement reduziert werden können. Das Federelement 7 übt ein rückstellendes Drehmoment um die Schwenkachse S auf den Sägekasten 6 und das Schneidelement aus, das sie nach Auslenkungen durch äußere Belastungen wieder in die Schneidposition mit im Wesentlichen horizontaler Schneidebene rückstellt.

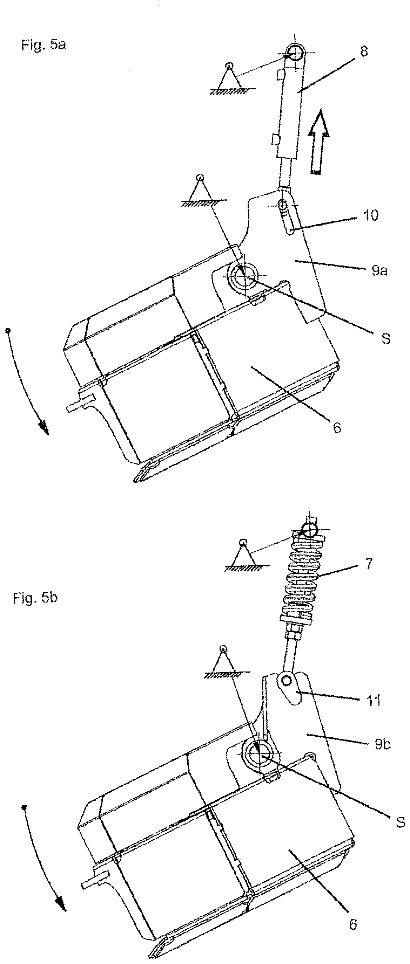

Um Blockaden des Schneidelements beispielsweise aufgrund eines abgerutschten Baumstammes zu vermeiden kann zusätzlich die Kolben-Zylindereinheit 8 aktiviert werden, wie in den Fig. 5a und 5b dargestellt ist. Nach Aktivierung der Kolben-Zylindereinheit 8 in Richtung des in der Fig. 5a nach oben gezeichneten Pfeiles kann der Sägekasten 6 in Überwindung des rückstellenden Drehmoments des Federelements 7 in Richtung des nach unten weisenden Pfeiles in eine relativ zur Schneidposition gekippte Neigeposition verschwenkt werden, der eine zur Schneidebene gekippte Neigungsebene des Schneidelements zugeordnet ist, wobei das Federelement 7 gestaucht wird. Das Schneidelement kann auf diese Weise in eine vom Baumstamm beabstandete Neigungsebene gekippt werden, um Blockaden zu vermeiden oder aufzuheben. In weiterer Folge kann die Kolben-Zylindereinheit 8 wieder in ihre Ausgangsstellung gebracht werden, um den Sägekasten 6 wieder in seine Schneidposition rückzustellen.

Mithilfe der Erfindung können somit Belastungen auf das Schneidelement während des Durchtrennens eines Baumstammes reduziert und insbesondere auch Funktionsbeeinträchtigungen durch Blockaden des Schneidelements vermieden werden.

## Patentansprüche

1. Vorrichtung zur Holzernte mit einem steuerbaren Auslegerarm und einer Säge- und Greifereinheit, die am Auslegerarm befestigt ist und eine Sägeeinheit (2) sowie eine Greifereinheit (3) umfasst, wobei die Greifereinheit (3) zumindest ein Greiferpaar (4, 5) zweier um Greiferschwenkachsen (G₁, G₂) zueinander schwenkbarer Greiferarme (4a, 4b, 5a, 5b) für einen Baumstamm aufweist, und die Sägeeinheit (2) einen in einem Sägekasten (6) angeordneten Schwenkantrieb für ein aus dem Sägekasten (6) ausschwenkbar angeordnetes Schneidelement zum Durchtrennen des Baumstammes aufweist, das als Kettensäge ausgeführt ist, **dadurch gekennzeichnet, dass** der Sägekasten (6) um eine Schwenkachse (S) schwenkbar an der Greifereinheit (3) angeordnet ist und über ein Federelement (7) und eine Kolben-Zylindereinheit (8) mit der Greifereinheit (3) verbunden ist, wobei das Federelement (7) über ein rückstellendes Drehmoment um die Schwenkachse (S) in seiner Gleichgewichtslage eine vorgegebene Schneidposition des Sägekastens (6) mit einer ihr zugeordneten Schneidebene des Schneidelements definiert, und der Sägekasten (6) mittels der Kolben-Zylindereinheit (8) in Überwindung des rückstellenden Drehmoments des Federelements (7) in eine relativ zur Schneidposition gekippte Neigeposition schwenkbar ist, der eine zur Schneidebene gekippte Neigungsebene des Schneidelements zugeordnet ist, wobei die Lagerung der Kolben-Zylindereinheit (8) am Sägekasten (6) oder an der Greifereinheit (3) in der Schneidposition des Sägekastens (6) einen Bewegungsfreiraum aufweist.

2. Vorrichtung nach Anspruch 1, **dadurch gekennzeichnet, dass** der Bewegungsfreiraum als ein am Sägekasten (6) angeordnetes Langloch (10) ausgeführt ist, in dem die Kolbenstange der Kolben-Zylindereinheit (8) mithilfe eines Gleitlagers gelagert ist.

3. Vorrichtung nach Anspruch 1 oder 2, **dadurch gekennzeichnet, dass** das Federelement (7) und die Kolbenstange der Kolben-Zylindereinheit (8) an einem Anlenkbereich (9) befestigt sind, der am Sägekasten (6) angeformt oder befestigt ist und mit dem Sägekasten (6) kinematisch einen zweiarmigen Hebel um die Schwenkachse (S) bildet, wobei der Sägekasten (6) einen ersten Hebelarm bildet und der Anlenkbereich (9) einen zweiten Hebelarm.

4. Vorrichtung nach einem der Ansprüche 1 bis 3, **dadurch gekennzeichnet, dass** die Schwenkachse (S) unterhalb des untersten Greiferpaares (5) und senkrecht zu deren Greiferschwenkachsen (G₁, G₂) angeordnet ist.

5. Vorrichtung nach einem der Ansprüche 1 bis 4, **dadurch gekennzeichnet, dass** das Federelement (7) und die Kolben-Zylindereinheit (8) an der den Greiferarmen (4a, 4b, 5a, 5b) abgewandten Seite der Greifereinheit (3) angeordnet sind.

6. Vorrichtung nach einem der Ansprüche 1 bis 5, **dadurch gekennzeichnet, dass** das Federelement (7) als Schraubendruckfeder ausgeführt ist, die im Wesentlichen parallel zur Längsachse der Kolben-Zylindereinheit (8) angeordnet ist.

7. Vorrichtung nach einem der Ansprüche 1 bis 6, **dadurch gekennzeichnet, dass** das als Kettensäge ausgeführte Schneidelement mit einer Fettschmierung versehen ist.

8. Vorrichtung nach einem der Ansprüche 1 bis 7, **dadurch gekennzeichnet, dass** das als Kettensäge ausgeführte Schneidelement mit einem automatischen Kettenspanner versehen ist.

## Claims

1. Device for timber harvesting, having a controllable extension arm and a sawing and gripper unit which is attached to the extension arm and comprises a sawing unit (2) as well as a gripper unit (3), wherein the gripper unit (3) has at least one gripper pair (4, 5) of two gripper arms (4a, 4b, 5a, 5b) for a tree trunk which can be pivoted about gripper pivot axes (G₁, G₂) relative to one another, and the sawing unit (2) has a pivot drive, which is arranged in a saw box (6), for a cutting element, which is arranged such that it can be pivoted out of the saw box (6), for severing the tree trunk, which cutting element is designed as a chain saw, **characterized in that** the saw box (6) is pivotably arranged on the gripper unit (3) about a pivot axis (S) and is connected to the gripper unit (3) via a spring element (7) and a piston-cylinder unit (8), wherein the spring element (7) defines a predetermined cutting position of the saw box (6) via a restoring torque about the pivot axis (S) in its equilibrium position, with an associated cutting plane of the cutting element, and the saw box (6) is pivotable by means of the piston-cylinder unit (8), by overcoming the restoring torque of the spring element (7), into an inclined position which is tilted relative to the cutting position and with which an inclined plane of the cutting element tilted relative to the cutting plane is associated, wherein the bearing of the piston-cylinder unit (8) on the saw box (6) or on the gripper unit (3) has a free movement space in the cutting position of the saw box (6).

2. Device according to claim 1, **characterized in that** the free movement space is designed as an elongated hole (10) arranged on the saw box (6), in which the piston rod of the piston-cylinder unit (8) is mounted with the aid of a plain bearing.

3. Device according to claim 1 or 2, **characterized in that** the spring element (7) and the piston rod of the piston-cylinder unit (8) are fastened to a linkage area (9) which is integrally formed on or fastened to the saw box (6) and kinematically forms with the saw box (6) a two-armed lever about the pivot axis (S), wherein the saw box (6) forms a first lever arm and the linkage area (9) forms a second lever arm.

4. Device according to one of claims 1 to 3, **characterized in that** the pivot axis (S) is arranged below the lowermost pair of grippers (5) and perpendicular to their gripper pivot axes (G₁, G₂) .

5. Device according to one of claims 1 to 4, **characterized in that** the spring element (7) and the piston-cylinder unit (8) are arranged on the side of the gripper unit (3) facing away from the gripper arms (4a, 4b, 5a, 5b).

6. Device according to one of claims 1 to 5, **characterized in that** the spring element (7) is designed as a helical compression spring arranged substantially parallel to the longitudinal axis of the piston-cylinder unit (8).

7. Device according to one of claims 1 to 6, **characterized in that** the cutting element designed as a chain saw is provided with a grease lubrication.

8. Device according to one of claims 1 to 7, **characterized in that** the cutting element designed as a chain saw is provided with an automatic chain tensioner.

## Revendications

1. Dispositif pour la récolte de bois avec un bras flèche pilotable et une unité de scie et de grappin qui est fixée au bras flèche et qui comprend une unité de scie (2) et une unité de grappin (3), dans lequel l'unité de grappin (3) comprend au moins une paire de grappins (4, 5) composée de deux bras de grappin (4a, 4b, 5a, 5b) capables de pivoter l'un par rapport à l'autre autour d'axes de pivotement des grappin (G₁, G₂) pour un tronc d'arbre, et l'unité de scie (2) comporte un entraînement pivotant disposé dans un coffre de scie (6) pour un élément coupant disposé de façon à pouvoir sortir en pivotant du coffre de scie (6) pour couper le tronc d'arbre et réalisé comme une tronçonneuse, **caractérisé en ce que** le coffre de scie (6) est disposé sur l'unité de grappin (3) de façon à pouvoir pivoter autour d'un axe de pivotement (S) et relié par un élément de ressort (7) et une unité de vérin (8) à l'unité de grappin (3), l'élément de ressort (7) définissant par un couple de rotation de rappel autour de l'axe de pivotement (S), dans sa position à l'équilibre, une position de coupe prédéfinie du coffre de scie (6) avec un plan de coupe de l'élément coupant qui lui est associé, et le coffre de scie (6) pouvant pivoter au moyen de l'unité de vérin (8), en surmontant le couple de rotation de rappel de l'élément de ressort (7), dans une position inclinée basculée par rapport à la position de coupe qui est associée à un plan d'inclinaison de l'élément coupant par rapport au plan de coupe, l'appui de l'unité de vérin (8) sur le coffre de scie (6) ou sur l'unité de grappin (3) dans la position de coupe du coffre de scie (6) présentant un dégagement pour le mouvement.

2. Dispositif selon la revendication 1, **caractérisé en ce que** le dégagement pour le mouvement est réalisé comme un trou oblong (10) formé sur le coffre de scie (6), dans lequel la tige de piston de l'unité de vérin (8) est supportée à l'aide d'un palier coulissant.

3. Dispositif selon la revendication 1 ou 2, **caractérisé en ce que** l'élément de ressort (7) et la tige de piston de l'unité de vérin (8) sont fixés sur une zone d'articulation (9) qui est formée ou fixée sur le coffre de scie (6) et qui forme avec le coffre de scie (6), du point de vue cinématique, un levier à deux bras autour de l'axe de pivotement (S), le coffre de scie (6) formant un premier bras de levier et la zone d'articulation (9) un deuxième bras de levier.

4. Dispositif selon l'une des revendications 1 à 3, **caractérisé en ce que** l'axe de pivotement (S) est disposé en dessous de la paire de grappins (5) la plus basse et perpendiculairement aux axes de pivotement de grappin (G₁, G₂) de celle-ci.

5. Dispositif selon l'une des revendications 1 à 4, **caractérisé en ce que** l'élément de ressort (7) et l'unité de vérin (8) sont disposés sur le côté de l'unité de grappin (3) opposé aux bras de grappin (4a, 4b, 5a, 5b).

6. Dispositif selon l'une des revendications 1 à 5, **caractérisé en ce que** l'élément de ressort (7) est réalisé comme un ressort hélicoïdal de compression qui est disposé de façon à être sensiblement parallèle à l'axe longitudinal de l'unité de vérin (8).

7. Dispositif selon l'une des revendications 1 à 6, **caractérisé en ce que** l'élément coupant réalisé comme une tronçonneuse est muni d'un graissage.

8. Dispositif selon l'une des revendications 1 à 7, **caractérisé en ce que** l'élément coupant réalisé comme une tronçonneuse est muni d'un tendeur de chaîne automatique.
